(19) Europäisches Patentamt
European Patent Office
Office européen des brevets

(11) Veröffentlichungsnummer: **0 218 933**
**B1**

(12) # EUROPÄISCHE PATENTSCHRIFT

(45) Veröffentlichungstag der Patentschrift: **14.11.90**

(51) Int. Cl.[5]: **C07F 9/52**, C07F 9/34

(21) Anmeldenummer: **86112744.7**

(22) Anmeldetag: **16.09.86**

(54) **Verfahren zur Herstellung von Chlorphosphanen und Thiophosphinsäurechloriden.**

(30) Priorität: **02.10.85 DE 3535149**

(43) Veröffentlichungstag der Anmeldung: **22.04.87 Patentblatt 87/17**

(45) Bekanntmachung des Hinweises auf die Patenterteilung: **14.11.90 Patentblatt 90/46**

(84) Benannte Vertragsstaaten: **DE FR GB**

(56) Entgegenhaltungen:
**FR-A-1 266 196**
**GB-A-2 127 412**
**US-A-3 074 994**

(73) Patentinhaber: **HOECHST AKTIENGESELLSCHAFT, Postfach 80 03 20, D-6230 Frankfurt am Main 80(DE)**

(72) Erfinder: **Weferling, Norbert, Dr., Schaesbergstrasse 13, D-5030 Hürth(DE)**
Erfinder: **Klose, Werner, Dr., Grachtstrasse 14, D-5042 Erftstadt(DE)**

EP 0 218 933 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zur Herstellung von Chlorphosphanen oder Thiophosphinsäurechloriden der allgemeinen Formeln $RPCl_2$, $R_2PCl$ bzw. $R_2P(=S)Cl$ aus den zugrundeliegenden wasserstoff-funktionellen primären oder sekundären Phosphanen bzw. sekundären Phosphansulfiden, wobei R gleiche oder verschiedene,geradkettige oder verzweigte, substituierte oder unsubstituierte Alkylreste mit 1-16 C-Atomen, Aryl-, Aralkyl- oder Alkylarylreste mit 6-9 C-Atomen oder Cycloalkylreste mit 5-10 C-Atomen bedeuten.

Ein derartiges Verfahren ist im wesentlichen aus der DE-A 32 35 787 bekannt, worin die Ausgangssubstanzen mit Hexachlorethan bei Temperaturen von 20 bis 180°C umgesetzt werden. Hierbei können zwei Reste R auch CH-Brückenglieder eines bicyclischen Ringsystems sein, welches ein P-Atom und außer den beiden CH-Brückengliedern noch weitere 4 bis 6 C-Atome enthält. Die Verwendung von Hexachlorethan ist jedoch toxikologisch nicht ganz unbedenklich und überdies ziemlich teuer.

Bereits früher ist versucht worden, primäre und sekundäre Chlorphosphane durch Chlorierung der entsprechenden organischen Phosphane mit Chlor herzustellen (US-A-2 437 796 und 2 437 798), doch hat sich gezeigt, daß sich diese Versuche nicht reproduzieren ließen, weshalb man als Chlorierungsmittel Phosgen den Vorzug gab (E. Steininger, Chem. Ber. 96 (1963), 3184-9, sowie US-A-3 074 994 und GB-A-904 086).

Das Arbeiten mit dem stark giftigen Phosgen ist jedoch mit vielen Risiken behaftet und führt häufig zu unbefriedigenden Ausbeuten.

Im einzelnen ist das Verfahren der Erfindung nunmehr dadurch gekennzeichnet, daß man die Ausgangsstoffe mit Phosphorpentachlorid, oder mit Chlorgas in Gegenwart von Phosphortrichlorid, bei Temperaturen von -78°C bis +145°C umsetzt, wobei auch zwei Reste R durch eine oder zwei substituierte oder unsubstituierte Kohlenwasserstoffketten mit 1-4 C-Atomen verbunden sein können.

Darüber hinaus ist das Verfahren der Erfindung bevorzugt oder wahlweise dadurch gekennzeichnet, daß man

a) die Umsetzung mit Phosphorpentachlorid bei Temperaturen von 0°C bis 111°C durchführt;
b) die Ausgangsstoffe und Chlorgas gleichzeitig in äquivalenten stöchiometrischen Mengen in vorgelegtes Phosphortrichlorid bei Temperaturen von -50°C bis 0°C einleitet;
c) die Umsetzung in Gegenwart eines inerten Lösemittels durchführt;
d) als Lösemittel geradkettige oder verzweigte aliphatische Kohlenwasserstoffe mit mehr als 5 C-Atomen, Methylcyclohexan oder aromatische Kohlenwasserstoffe einsetzt;
e) als Lösemittel Toluol oder Xylole einsetzt;

Durch das erfindungsgemässe Verfahren wird unter anderem als neuer chemischer Stoff ein Isomerengemisch bestehend aus 9-Chlor-9-thioxo-9-phosphabicyclo[3.3.1] und [4.2.1] nonan der Formel

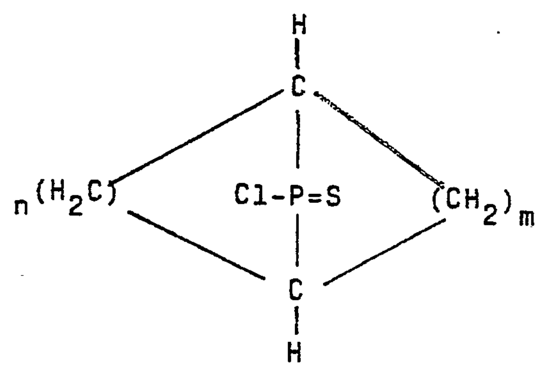

worin m = n = 3 oder m = 2 und n = 4 bedeuten, zugänglich.

Diese beiden neuen Verbindungen sind ein Beispiel für den Sonderfall, daß 2 Reste R durch zwei Kohlenwasserstoffketten mit 1-4 C-Atomen miteinander verbunden sind.

Definitionsgemäß können ein oder mehrere Wasserstoffatome in den Alkyl-, Aryl-, Aralkyl-. Alkylaryl- oder Cycloalkylresten sowie in den zwei Reste R verbindenden Kohlenwasserstoffketten substituiert sein. Als Substituenten kommen Atome oder Atomgruppierungen infrage, die mit dem Chlorierungsmittel nicht reagieren, z.B. Halogene (F-, Cl-, Br-, I-), Pseudohalogen-(-SCN, -OCN), Sulfo-(-$SO_3H$) oder Nitrogruppen (-$NO_2$).

Als Lösemittel werden bevorzugt Toluol (Sdp. 110,6°C) oder Xylole (Sdp. 138-145°C) verwendet, wobei es von Vorteil ist, $PCl_5$ oder $PCl_3$ im Lösemittel gelöst oder als Suspension vorzulegen und die zu chlorierende Ausgangsverbindung, bevorzugt ebenfalls im Lösemittel gelöst, langsam zuzufügen.

Die Umsetzungen gemäß der Erfindung verlaufen nach den Reaktionsgleichungen

$$\overset{X}{R_2PH} + PCl_5 \longrightarrow HCl + PCl_3 + \overset{X}{R_2PCl}$$

(X = freies Elektronenpaar oder =S)
oder
$RPH_2 + 2\ PCl_5 \rightarrow 2\ HCl + 2\ PCl_3 + RPCl_2$.

$PCl_5$ wird zur Vermeidung von Nebenreaktionen bevorzugt in stöchiometrischen Mengen eingesetzt. Setzt man hingegen anstelle von $PCl_5$ dessen Ausgangssubstanzen $PCl_3$ und $Cl_2$ ein, so ist es möglich, $PCl_3$ in unterstöchiometrischer Menge, gewissermaßen als Katalysator, vorzulegen. Das beim Einsatz von $PCl_5$ stets als Koppelprodukt anfallende $PCl_3$ kann aufgrund seines niedrigen Siedepunkts (75,9°C) sehr leicht von der chlorierten Organophosphorverbindung abgetrennt und ggf. in separater Reaktion mit elementarem Chlor auf einfache Weise wieder in $PCl_5$ übergeführt werden.

Die in den meisten Fällen beobachtete glatte Bildung der chlorfunktionellen P-Verbindungen gemäß der Erfindung ist nicht von vornherein zu erwarten gewesen, da primäre und sekundäre Phosphane als Ausgangsstoffe durchaus auch mit Phosphonigsäurechloriden (Dichlorphosphanen) oder Phosphinigsäurechloriden (Chlorphosphanen) als den Reaktionsprodukten unter HCl-Abspaltung zu Diphosphanen weiterreagieren können. Ferner kann $PCl_3$ mit Phosphanen (Ausgangsstoffe) exotherm zu einem unlöslichen, vermutlich polymeren, rot-orange-farbenen Feststoff reagieren. Schließlich ist die Ausbildung stabiler Säure-Base-Addukte von primärem oder sekundärem Phosphan und dem Koppelprodukt HCl möglich.

Besonders bei den Phosphanen mit wenig ausgeprägter Basizität verlaufen die Reaktionen ausgesprochen glatt und mit guten bis sehr guten Ausbeuten. Lediglich bei der Umsetzung des vergleichsweise stark basischen Di-n-butylphosphans mit $PCl_5$ wurde die Bildung eines stabilen Phosphoniumsalzes ($[Bu_2P^{\oplus}Cl_2]Cl^{\ominus}$) beobachtet, das die Ausbeute an dem erwarteten Chlorphosphan stark herabsetzte (Beispiel 5).

Die Vorteile des erfindungsgemäßen Verfahrens liegen darin, daß es toxikologisch vergleichsweise unbedenklich ist. $PCl_5$ ist ein billiges und einfach zu handhabendes Chlorierungsmittel. Die als Nebenprodukte entstehenden Verbindungen $PCl_3$ und HCl sind wieder verwendbar. Die erfindungsgemäß hergestellten Verbindungen, besonders das Isomerengemisch aus 9-Chlor-9-thioxo-9-phosphabicyclo-[3.3.1] und [4.2.1] nonan, können als Zwischenprodukte bei der Synthese von Arznei- und Pflanzenschutzmitteln dienen.

Beispiel 1 (Herstellung von Monocyclohexyldichlorphosphan)

Zu einer Suspension von 436 g $PCl_5$ (2.1 Mol) in 1 l Toluol wurden bei 25°C 319 g einer 38 gewichtsprozentigen toluolischen Monocyclohexylphosphanlösung (1,05 Mol) getropft. Nach Beendigung der stark exotherm verlaufenden Reaktion wurde die Reaktionsmischung über eine Umkehrfritte filtriert. Es blieben 5 g eines orangefarbenen Feststoffs zurück. Die klare Lösung ($^{31}P$-NMR: δP: 195 ppm, $C_6H_{11}PCl_2$, 95 Mol %) wurde im Vakuum destilliert.
Kp. 50°C / 0,1 mbar. Ausbeute 170 g (88 % d. Th.)

Beispiel 2 (Herstellung von sek.-Butyldichlorphosphan)

Eine Lösung von 70 g (0.78 Mol) Mono-sek.-Butylphosphan in 70 g Toluol wurde bei 25°C in eine Suspension von 324 g (1,56 Mol) $PCl_5$ in 500 g Toluol eingetropft. Es erfolgte eine exotherme Reaktion unter HCl-Entwicklung. Die Dosierung des Phosphans wurde so eingestellt, daß die maximale Reaktionstemperatur 50°C betrug. Nach Beendigung des Zutropfens wurde bei 80°C gerührt, bis keine HCl-Entwicklung mehr stattfand. Die Reaktionsmischung war klar und homogen. Die Leichtsieder wurden bei Raumtemperatur und 30 mbar abgezogen. $^{31}P$-NMR: δP = 201 ppm, sek.-$C_4H_9PCl_2$, 87 Mol %; δ P = 57,1 ppm, sek.-$C_4H_9P(:O)Cl_2$, 3 Mol %.
Der Rückstand wurde im Vakuum destilliert.
Kp. 70°C / 53 mbar. Ausbeute 50 g (40 % d. Th.)

Beispiel 3 (Herstellung von Phenyldichlorphosphan)

Zu einer Suspension von 160 g $PCl_5$ (0,77 Mol) in 500 ml Toluol wurden bei 25°C 38,5 g (0,34 Mol) Phenylphosphan gelöst in 40 ml Toluol zugefügt. Nach Abklingen der exothermen Reaktion wurde auf 70°C bis zur Beendigung der Gasentwicklung erwärmt. Die Leichtsieder wurden i. Vak. abgezogen. Rohproduktausbeute: 67 g; $^{31}P$-NMR:δP = 161 ppm, $C_6H_5PCl_2$, 94,4 Mol %. Der Rückstand wurde i. Vak. destilliert.
Kp. 98°C / 17 mbar. Ausbeute: 50,6 g (81 % d. Th.)

Beispiel 4 (Herstellung von Dicyclohexylchlorphosphan)

Eine Lösung von 19 g (0,1 Mol) Dicyclohexylphosphan in 50 ml Toluol wurde in eine Suspension von 21 g (0,1 Mol) $PCl_5$ in 100 ml Toluol getropft. Die Reaktionstemperatur wurde unter 30°C gehalten. Nach Beendigung der Zugabe wurde noch 1 Stunde unter Rückfluß gekocht. Ein geringer Niederschlag wurde mittels Umkehrfritte entfernt und die Reaktionsmischung bei 0,1 mbar und 60°C von allen Leichtsiedern befreit. Ausbeute: 23,3 g; $^{31}P$-NMR: δP = 126 ppm, $(c\text{-}C_6H_{11})_2PCl$, 96 Mol %; δP = 54 ppm, $(c\text{-}C_6H_{11})_2P(O)Cl$, 3,7 Mol %.

Beispiel 5 (Herstellung von Di-n-butylchlorphosphan)

Bei einer Reaktionstemperatur von max. 30°C wurden zu einer Suspension von 232 g (1,1 Mol) $PCl_5$ in 500 ml Toluol 148 g (1 Mol) Di-n-butylphosphan getropft. Bei einem Vakuum von 130 mbar wurden während der Reaktion entstehendes HCl und $PCl_3$ abgezogen und in einer Kühlfalle kondensiert. Die Reaktionsmischung wies nach Beendigung der Reaktion zwei flüssige Phasen auf. Die obere Phase enthielt $PCl_3$ in Toluol. Die Hauptmenge des Chlorphosphans befand sich in der unteren Phase ($^{31}P$-NMR). Deren destillative Aufarbeitung ergab eine Produktmenge von 101 g (55 % d. Th.) Kp. 92°C / 16 mbar.

Beispiel 6 (Herstellung von 9-Chlor-9-phosphabicyclo[3.3.1] und [4.2.1] nonan (Isomerengemisch)

In eine Mischung aus 167 g (0.8 Mol) $PCl_5$ und 900 ml Toluol wurde bei Raumtemperatur eine Lösung von 115 g (0,8 Mol) 9H-9-Phosphabicyclo[3.3.1] und [4.2.1] nonan in 500 ml Toluol getropft. Nach Beendigung der exothermen Reaktion ließ man 2 Stunden bei 50°C nachreagieren. Die P-NMR-spektroskopische Analyse einer Probe des Rohprodukts zeigte, daß die Umsetzung vollständig verlaufen und lediglich die beiden isomeren Chlorphosphane entstanden waren. Nach Entfernen von geringen orangefarbenen Niederschlagsmengen wurden alle Leichtsieder i. Vak. abgezogen. Ausbeute: 119 g (83,5 % d. Th.).

Beispiel 7 (Herstellung von 9-Chlor-9-thioxo-9-phosphabicyclo[3.3.1] und [4.2.1]nonan (Isomerengemisch)

162 g (0,9 Mol) 9H-9-thioxo-9-phosphabicyclo[3.3.1] und [4.2.1.]nonan (Isomerengemisch) und 194 g (0,9 Mol) $PCl_5$ wurden bei Raumtemperatur mit 500 ml Toluol gemischt, ohne daß eine merkliche Reaktion einsetzte. Beim Erwärmen der Mischung beobachtete man ab ca. 50°C die erwartete Chlorwasserstoffabspaltung. Bis zur Beendigung der Gasentwicklung wurde unter Rückfluß gekocht. Eine geringe Niederschlagsmenge wurde entfernt und alle Leichtsieder i. Vak. abgezogen. Der feste Rückstand konnte aus Toluol umkristallisiert werden. Ausbeute: 120 g (62 % d. Th.) $^{31}P$-NMR: δP = 122,3 ppm, 105,7 ppm.

Analysendaten:

P ber. 14,8 %; C ber. 46,5 %; H ber. 7,2 %
P gef. 14,8 %; C gef. 46,7 %; H gef. 6,8 %

Beispiel 8 (Herstellung von Dicyclohexylthiophosphinsäurechlorid)

Zu einer Suspension von 21 g (0,1 Mol) $PCl_5$ in 50 ml Toluol wurde eine Lösung von 23 g (0,1 Mol) Dicyclohexylphosphansulfid in 50 ml Toluol getropft. Die Reaktion erfolgte exotherm mit einem Temperaturmaximum von 35°C. Nach 4 Std. wurden die Leichtsieder der klaren,gelblichen Lösung i. Vak. abgezogen. Ausbeute: 24,3 g (91,5 % d. Th.) $^{31}P$-NMR: δ P = 119,3 ppm.

Beispiel 9 (Herstellung von Dicyclohexylchlorphosphan mit $PCl_3$ / $Cl_2$)

70 g (0,5 Mol) $PCl_3$ wurden in 200 ml Toluol gelöst und auf -30°C abgekühlt. Innerhalb von 1 h wurden gleichzeitig 100 g (0,5 Mol) Dicyclohexylphosphan zugegeben sowie die stöchiometrische Menge Chlorgas eingeleitet. Die Reaktionstemperatur betrug maximal -10°C. Die schwach gelbe, klare Lösung wurde von geringen Mengen eines rotbraunen Bodenkörpers abdekantiert. Die Auswertung des $^{31}P$-NMR-Specktums einer Probe ergab, daß die Ausgangsverbindung vollständig umgesetzt war. Außer $PCl_3$ wurden zwei phosphorhaltige Verbindungen gefunden: δP = 126 ppm, $(c\text{-}C_6H_{11})_2PCl$, 98 Mol%; δP = 139,7 ppm, $(c\text{-}C_6H_{11})_2PCl_2)^{\oplus}Cl^{\ominus}$, 2 Mol%.

Der nach Entfernung aller leichtflüchtigen Verbindungen verbliebene Rückstand betrug 120 g (117 g $(c\text{-}C_6H_{11})_2PCl$ würden 100 % Ausbeute entsprechen).

**Patentansprüche**

1. Verfahren zur Herstellung von Chlorphosphanen oder Thiophosphinsäurechloriden der allgemeinen Formeln $RPCl_2$, $R_2PCl$ bzw. $R_2P(=S)Cl$ aus den zugrundeliegenden Wasserstoff-funktionellen primären oder sekundären Phosphanen bzw. sekundären Phosphansulfiden, wobei R gleiche oder verschiedene, geradkettige oder verzweigte, substituierte oder unsubstituierte Alkylreste mit 1-16 C-Atomen, Aryl-, Aralkyl- oder Alkylarylreste mit 6-9 C-Atomen oder Cycloalkylreste mit 5-10 C-Atomen bedeuten, wobei auch zwei Reste R durch eine oder zwei substituierte oder unsubstituierte Kohlenwasserstoffketten mit 1-4 C-Atomen verbunden sein können, dadurch gekennzeichnet, daß man die Ausgangsstoffe mit Phosphorpentachlorid, oder mit Chlorgas in Gegenwart von Phosphortrichlorid, bei Temperaturen von -78°C bis +145°C umsetzt.

2. Verfahren nach Anspruch 1, dadurch gekennzeichnet, daß man die Umsetzung mit Phosphorpentachlorid bei Temperaturen von 0°C bis 111°C durchführt.

3. Verfahren nach Anspruch 1, dadurch gekennzeichnet, daß man die Ausgangsstoffe und Chlorgas gleichzeitig in äquivalenten stöchiometrischen Mengen in vorgelegtes Phosphortrichlorid bei Temperaturen von -50°C bis 0°C einleitet.

4. Verfahren nach einem der Ansprüche 1 bis 3, dadurch gekennzeichnet, daß man die Umsetzung in Gegenwart eines inerten Lösemittels durchführt.

5. Verfahren nach Anspruch 4, dadurch gekennzeichnet, daß man als Lösemittel geradkettige oder verzweigte aliphatische Kohlenwasserstoffe mit mehr als 5 C-Atomen, Methylcylohexan oder aromatische Kohlenwasserstoffe einsetzt.

6. Verfahren nach Anspruch 4 oder 5, dadurch gekennzeichnet, daß man als Lösemittel Toluol oder Xylole einsetzt.

## Claims

1. A process for the preparation or chlorophosphanes or thiophosphinyl chlorides of the general formulae $RPCl_2$, $R_2PCl$ and $R_2P(=S)Cl$ from the underlying hydrogen-functional primary or secondary phosphanes or secondary thiophosphanes, in which R are indentical or different, straight-chain or branched, substituted or unsubstituted alkyl radicals of 1-16 carbon atoms, aryl, aralkyl or alkylaryl radicals of 6-9 carbon atoms or cycloalkyl radicals of 5-10 carbon atoms, it also being possible for two radicals R to be linked by one or two substituted or unsubstituted hydrocarbon chains of 1-4 carbon atoms, which comprises reacting the starting materials with phosphorus pentachloride or with chlorine gas in the presence of phosphorus trichloride at temperatures of -78°C to +145°C.

2. The process as claimed in claim 1, wherein the reaction with phosphorus pentachloride is carried out at temperatures of from 0°C to 111°C.

3. The process as claimed in claim 1, wherein the starting materials and chlorine gas are simultaneously introduced in equivalent stoichiometric amounts into initially introduced phosphorus trichloride at temperature of from -50°C to 0°C.

4. The process as claimed in one of claims 1 to 3, wherein the reaction is carried out in the presence of an inert solvent.

5. The process as claimed in claim 4, wherein the solvent used comprises straight-chain or branched aliphatic hydrocarbons having more than 5 carbon atoms, methylcyclohexane or aromatic hydrocarbons.

6. The process as claimed in claim 4 or 5, wherein the solvent used is toluene or xylenes.

## Revendications

1. Procédé pour la fabrication de chlorophospines ou de chlorures d'acides thiphosphiniques de formules générale $RPCl_2$, $R_2PCl$ ou $R_2P(=S)Cl$ à partir des phosphines primaires ou secondaires ou des sulfures de phosphines secondaires de base, dans lesquels R représente des restes alkyles à chaîne droite ou ramifiée en $C_1$-$C_{16}$, substitués ou non, des restes aryles, arylalkyles ou alkylaryles en $C_6$-$C_9$ ou des restes cycloalkyles en $C_5$-$C_{10}$, identiques ou différents, deux restes R pouvant aussi être reliés par une ou deux chaînes hydrocarbonées en $C_1$-$C_4$ substituées ou non, caractérisé en ce que l'on fait réagir les produits de départ avec le pentachlorure de phosphore, ou avec le chlore gazeux en présence de trichlorure de phosphore, à des températures de -78°C à +145°C.

2. Procédé selon la revendication 1, caractérisé en ce que l'on met en œuvre la réaction avec le pentachlorure de phosphore à des températures de 0 à 111°C.

3. Procédé selon la revendication 1, caractérisé en ce que l'on envoie simultanément les produits de départ et le chlore gazeux en quantités stœchiométriques équivalentes à des températures de -50°C à 0°C dans le trichlorure de phosphore préalablement chargé.

4. Procédé selon l'une des revendications 1 à 3, caractérisé en ce que l'on met en œuvre la réaction en présence d'un solvant inerte.

5. Procédé selon la revendication 4, caractérisé en ce que l'on utilise comme solvants des hydrocarbures aliphatiques à chaîne droite ou ramifiée en plus de $C_5$, le méthylcyclohexane ou des hydrocarbures aromatiques.

6. Procédé selon la revendication 4 ou 5, caractérisé en ce que l'on utilise comme solvant le toluène ou les xylènes.